# EUROPÄISCHE PATENTSCHRIFT

(11) **EP 3 258 880 B1**
(45) Veröffentlichungstag und Bekanntmachung des Hinweises auf die Patenterteilung: **14.04.2021**
(21) Anmeldenummer: 16709298.0
(22) Anmeldetag: 19.02.2016
(51) Int. Cl.: A61C 8/00, A61C 13/00, A61C 13/225

(54) **PASSIVE FIT VON IMPLANTATBRÜCKEN UND -STEGEN MITTELS EINES CAD/CAM TOOLS FÜR DIE MODELLFREIE ERSTELLUNG VON IMPLANTATGETRAGENEN RESTAURATIONEN**
PASSIVE FIT OF IMPLANT BRIDGES AND IMPLANT BARS BY MEANS OF A CAD/CAM TOOL FOR THE MODEL-FREE CREATION OF IMPLANT-SUPPORTED RESTORATIONS
INSERT PASSIF DE PONTS ET DE NERVURES D'IMPLANT AU MOYEN D'UN OUTIL CAD/FAO POUR LA CRÉATION SANS MODÈLE DE RESTAURATIONS PORTÉES PAR IMPLANT

(30) Priorität: 19.02.2015 DE 102015203031
(43) Veröffentlichungstag der Anmeldung: 27.12.2017
(73) Patentinhaber: Sirona Dental Systems GmbH, 64625 Bensheim (DE)
(72) Erfinder: SCHNITZSPAN, Paul, 64342 Seeheim-Jugenheim (DE)
(74) Vertreter: Özer, Alpdeniz
(86) Internationale Anmeldenummer: PCT/EP2016/053506
(87) Internationale Veröffentlichungsnummer: WO 2016/131939

(56) Entgegenhaltungen:
- WO-A1-2014/117871
- DE-U1- 20 221 475
- US-A- 5 885 078
- US-A- 6 056 547
- US-A1- 2004 142 300
- US-A1- 2009 325 125
- US-A1- 2013 302 752
- US-B1- 6 692 254

## Beschreibung

### Technisches Gebiet

Die Erfindung betrifft ein Einprobeteil zur Erstellung eines spannungsfreien Sitzes, sogenannten Passive fit, von implantat- und/oder pfeilergetragenen Brücken und Stegen. Die Erfindung betrifft die Erstellung von Restaurationen mittels eines CAD/CAM-Tools. Die Erfindung betrifft ein Verfahren zur Erstellung einer Restauration aus einem digitalen Modell eines mit mindestens zwei Implantaten und/oder Pfeilern versorgten Patientenkiefers, wobei das Modell mittels eines intraoral erstellten Scans ermittelt ist.

### Stand der Technik

Bei der Herstellung von implantatgetragenen Brücken und stegen treten häufig Passungsprobleme an den Übergängen/Verbindungen zu den Implantaten auf. Diese Passungsprobleme haben verschiedene Ursachen. Sie betreffen in der Regel sowohl die konventionelle Herstellung als auch die CAD/CAM gestützte Herstellung der Versorgung.

Einprobeteile und/oder Herstellungsverfahren sind beispielsweise aus der US 2004/142300 A1, der US 2009/325125 A1 und der WO 2014/117871 A1 bekannt. US6056547A offenbart ein Abdruck- und Fundamentsystem für implantatgetragene Prothesen. US2013/0302752 offenbart ein Zahnabdruck, eine Bohrschablone und ein Verfahren zum Bereitstellen einer relativen Position zur Herstellung einer Bohrschablone.

In gleicher Weise können derartige Probleme auch bei Versorgungen entstehen, die auf Zähnen, sogenannten Pfeilern oder Pfosten befestigt werden. Zur Befestigung dienen vorhandene Zähne eines Patienten, die zur Befestigung in bekannter Weise beschliffen werden. Auch Mischformen von Pfeilern und Implantaten sind zur Befestigung der Restaurierung möglich.

Bei konventionellen Verfahren wie der Gußtechnik ist es technisch nicht vermeidbar, dass in der Abkühlphase erhebliche Verzüge der Versorgung entstehen. Bei CAD/CAM Verfahren können Ungenauigkeiten bei der Digitalisierung der Implantatlagen entstehen, hervorgerufen durch Ungenauigkeiten im Scanprozess. Diese Ungenauigkeiten betreffen vor allem Patienten mit zahnlosen Kiefern, bei denen die Korrelation der einzelnen Bildfelder aufgrund mangelnder Struktur im Kiefer schwierig ist. Des Weiteren kann bei der Abdrucknahme und Erstellung des Meistermodells und der Übertragung der Implantatlagen ins Meistermodell Fehler entstehen. Letzterer Fehler betrifft sowohl konventionelle als auch CAD/CAM Verfahren sofern mit einem Meistermodell gearbeitet wird. Eine reine digitale intraorale Abformung ist aufgrund des technischen Standes hinsichtlich der Genauigkeit der Bild-Registrierung und der Größe des Bildfeldes der Intra-oral-Scanner zu ungenau.

Die Passungsprobleme können zu schwerwiegenden Problemen führen, nämlich z.B. einer kostenintensiven Neuerstellung der Restauration, einem Bruch und/oder Verlust der Versorgung, einer Infektion am Randspalt zwischen Versorgung und Implantat, oder Schmerzen erzeugen, die durch Spannungen hervorgerufen sind und zum Verlust des Implantats durch Spannungen oder Infektionen führen.

Das Ziel eines jeden Zahnarztes oder Zahntechnikers ist daher die Erreichung dessogenannten Passive fit. Passive fit bedeutet bei Implantat-Versorgungen einen spannungsfreien Sitz mit keinem bzw. mit geringem, medizinisch vertretbarem Randspalt zwischen Versorgung und Implantat.

Es gibt mehrere Möglichkeiten das Problem zu umgehen. Dabei ist zu unterscheiden, ob die Verzugsprobleme bei Gußtechniken überwunden werden sollen oder der Übertragungsfehler der Implantatpositionen.

Wenn der Zahntechniker die Restauration mittels Gußtechnik erstellt, setzt der Techniker nach der Abkühlphase die Restauration auf das Meistermodell mit Implantatanalogen auf. Wenn die Restauration nicht auf die Implantate passt, dann kann der Techniker entweder mittels Funkenerosion oder nach einem aus der WO 98/20806 A1 bekannt gewordenen Verfahren den Mangel beheben.

Bei der Funkenerosion wird der Sitz der Implantat-Versorgung in einem Dielektrikum mittels Funkenerosion passiviert. An die Stelle der Laboranaloge werden Elektroden gesetzt, die die Struktur der Implantate perfekt nachbilden. Der Anschluss an eine Gleichstromquelle erwirkt einen Metallabtrag von der Implantat-Versorgung an die Elektroden. Nach Abschluss des Prozess sitzt die Versorgung perfekt auf den Laboranalogen auf. Hierdurch wird eine Passung auf dem Meistermodell erzielt.

Alternativ kann die nicht passende Restauration oberhalb der Implantate aufgetrennt werden. Die abgetrennten Teile mit Implantatverbindung werden in die Implantate, d.h. Laboranaloge im Meistermodell, geschraubt. Danach wird der obere Teil der Restauration in eine Position oberhalb der Implantate gebracht und mit den abgetrennten verschraubten Teilen, z.B. durch Löten, Schweißen, Funkenerosion, zusammengefügt.

Übertragungsfehler der Implantatposition werden durch Verkleben im Mund mit zusätzlichen Teilen behoben.

Eine Variante zur Erreichung des Passive fit ist die Verwendung von sogenannten Multi-Unit-Abutments (MU Abutments) mit Klebekappen. Hierbei wird in jedes Implantat ein Multi-Unit Abutment geschraubt. Auf dies MU Abutments werden sogenannte Klebekappen geschraubt, die eine konische Form nach oben aufweisen. Auf diese Klebekappen wird die Restauration aufgesetzt und mit den Klebekappen intraoral verklebt. Die Klebekappen weisen einen Schraubensitz auf und werden mit den MU Abutments verschraubt. Durch den Klebespalt zwischen Restauration und Klebekappen können Ungenauigkeiten bis zu einem gewissen Grad ausgeglichen werden.

Schließlich können Ungenauigkeiten des Sitzes durch ein vertikales Auftrennen und wieder Zusammenfügen behoben werden.

Beim vertikalen Auftrennen wird ein ähnliches Prinzip wie beim horizontalen Auftrennen angewendet. Hier wird die Restauration allerdings nicht oberhalb der Implantate getrennt sondern vertikal zwischen den Implantaten. Anschließend werden die einzelnen Teile separat auf den Laboranalogen im Meistermodell verschraubt und die Teile wieder zusammengefügt, z.B. durch Löten oder Schweißen oder Kleben. Eine Variante ist die aufgetrennte Restauration im Patentientenmund zusammenzukleben und die verklebte Restauration zur Finalisierung oder gegebenenfalls zur Neuerstellung mit korrekter Relation der Implantatpositionen an den Techniker zurückzuschicken.

Zur Vermeidung derartiger Korrekturen, die häufig auch mechanische Schwachstellen bedingen, wurde die traditionelle Gusstechnik für die Herstellung von mehrgliedrigen Brückengerüsten in den letzten Jahren weitgehend von der computerunterstützten Fertigung abgelöst. Als Gerüstmaterial werden nicht mehr Gusslegierungen mit potentiellen strukturellen Inhomogenität und ungenauer Passung verarbeitet. Stattdessen werden industriell vorgefertigte, homogene Blöcke aus Metallen und Keramiken wie Titan und Zirkoniumdioxid verwendet, aus welchen das Gerüst herausgefräst wird. Die computerunterstützte Produktionskette zahn- und implantatgetragener Rekonstruktionen verringert die Anzahl handwerklicher Arbeitsschritte und damit die Möglichkeiten manueller Verarbeitungsfehler. Ein solches Verfahren ist aus DIGITAL_DENTAL.NEWS, 8. Jahrgang, Januar/Februar 2014, PD Dr. Joannis Katsoulis: "Passgenauigkeit von implantatgetragenen CAD/CAM-Rekonstruktionen" bekannt, von dem die vorliegende Erfindung ausgeht.

Beim vorbekannten Verfahren wird der mit Implantaten oder mit vorbereiteten beschliffenen Haltezähnen versorgte Kiefer des Patienten zunächst intraoral abgeformt oder mittels eines intraoralen Scans ein Datenmodell des Kiefers erstellt. Auf dieser Grundlage wird zunächst ein Meistermodell gefertigt, von dem zur detailgetreuen Erfassung der Oberfläche mit Scan-Abutments auf den Implantatanalogen und/oder Pfeilerzähnen mittels eines extraoralen Scans digitalisiert wird. Die generierten Daten der Digitalisierung können in unterschiedliche CAD/CAM-Systeme importiert und weiterverwendet werden. Für die digitale Gestaltung von Einzelkronen reicht dieser erste Digitalisierungsschritt vom Modell inklusive Gegenkiefer und Kieferrelation aus. Bei mehrgliedrigen Zahn- und implantatgetragenen Brückengerüsten wird vom Techniker nach wie vor häufig eine körperliche Vorform des Gerüstes, d.h. ein sogenanntes VAX-UP klassisch hergestellt und dann gescannt. Der Gerüstescan wird dann digital mit dem Meistermodell zusammengeführt und mittels CAD zur definitiven Form adaptiert.

Alternativ wird die vorgesehene komplette Zahnform, wie ein Set-up oder durch Digitalisierung der Ausgangssituation, d.h. gescannt und dann mittels Konstruktionssoftware auf ein keramikunterstützendes Gerüst reduziert. Die gewünschte vollanatomische Form der Versorgung kann auch virtuell konstruiert und nachfolgend reduziert werden. Für abnehmbare implantatgetragene Stegarbeiten erfolgt typischerweise als zweiter Scan die definitive Zahnaufstellung, s.g. Set-ups, welche dann mit dem Implantat-Modell überlagert wird und die freie CAD-Gestaltung eines Steges erlaubt.

Aufgabe der Erfindung ist es ein, ein Verfahren zur Herstellung von implantat- und/oder pfeilergetragenen Restaurationen vorzuschlagen, das den Herstellungsprozess wesentlich verkürzt und eine verbesserte Genauigkeit der erzeugten Restaurationen erlaubt.

Außerdem ist es Aufgabe der Erfindung, einen Einprobeteil sowie eine implantatgetragene Restauration mit besserer Genauigkeit anzugeben.

### Offenbarung der Erfindung

Diese Aufgabe wird durch das Verfahren zur Erstellung einer Restauration nach Anspruch 1 gelöst. Die Abhängigen Ansprüche definieren weitere bevorzugte Ausführungsbeipiele.

In Ausgestaltung der Erfindung ist vorgesehen, dass ein Einprobeteil zur Erstellung eines spannungsfreien Sitzes, sogenannten Passive fit, von implantat- und/oder pfeilergetragenen Brücken und Stegen mittels eines CAD/CAM-Tools für die Erstellung von Restaurationen, hergestellt wird.

In Ausgestaltung der Erfindung ist vorgesehen, dass das Einprobeteil pro Implantat und/oder Pfeiler eine scanfähige Struktur, vorzugsweise in definiertem Abstand und Winkel zum Implantat und/oder Pfeiler, aufweist.

Das Einprobeteil wird zunächst auf der Grundlage eines intraoralen dreidimensionalen Scans eines mit Implantaten und/oder beschliffenen Pfeilerzähnen versorgten Kiefers gefertigt. Das so gefertigte Einprobeteil wird auf den Kiefer zur Einprobe aufgesetzt und/oder mit den Implantaten verschraubt. Bei auftretenden mechanischen Spannungen zwischen Einprobeteil und Kiefer kann das Einprobeteil geteilt und neu gefügt werden. Sitzt dann das Einprobeteil spannungsfrei, so kann es entweder intraoral oder extraoral neu gescannt werden. Als genaue Bezugspunkte zur Lagekorrektur dienen dabei scanfähige Strukturen, deren Lage, Abstand und/oder Richtung zueinander dazu dienen, das ursprüngliche digitale Modell des Kiefers und/oder des Einprobeteils zu korrigieren. Dadurch, dass das Einprobeteil eine, vorzugsweise durch Kleben, gefügte Trennstelle aufweist, können durch den Sitz verursachte mechanische Spannungen mit Vorteil beseitigt werden.

In Ausgestaltung der Erfindung ist vorgesehen, dass die scanfähige Struktur ein spitz zusammenlaufendes Prisma, vorzugsweise ein Tetraeder, ist. Die Spitze solcher vielflächigen Körper lässt sich im Scan besonders gut mit geringer Unsicherheit erkennen. Entsprechend genau sind dann die aufgrund der bekannten relativen Lagen zueinander durchgeführten Korrekturen des digitalen Modells.

Zusätzlich ist es von Vorteil, wenn das Einprobeteil auf einem zwischen zwei Implantaten und/oder Pfeilern gelegenen Segment eine scanbare Struktur, vorzugsweise eine zweidimensionale Fräsung, vorgesehen ist. Auch ein solche linienförmige Struktur erhöht die Genauigkeit des digitalen Modells zwischen den zuvor beschriebenen Referenzpunkten.

Das Einprobeteil ist in weiterer Ausgestaltung der Erfindung vorteilhaft leicht, hygienisch und bequem einzupassen, wenn es aus Kunststoff, vorzugsweise aus Polymethylmethacrylat PMMA, hergestellt ist. Insbesondere lässt sich das Einprobeteil aus Polymethylmethacrylat (PMMA) durch 3D-drucken oder durch CAM in der benötigten Genauigkeit herstellen.

In weiterer Ausgestaltung des erfindungsgemäßen Einprobeteils ist vorgesehen, dass es für jedes Implantat einen Schraubenkanal aufweist. In den Schraubenkanal können Laboranaloge und/oder Abutments eingeschraubt werden, die die exakte Sitzprobe der Restauration auf dem Einprobeteil und/oder des Einprobeteils auf dem Kiefer ermöglichen.

Die Verfahrensaufgabe wird durch ein Verfahren zur Erstellung einer Restauration aus einem digitalen Modell eines mit mindestens zwei Implantaten und/oder Pfeilerzähnen versorgten Patientenkiefers, wobei das Modell mittels eines intraoral erstellten Scans ermittelt ist, dadurch gelöst, dass aus dem Modell mittels CAD/CAM ein Einprobeteil hergestellt wird, vorzugsweise aus Kunststoff, und das Einprobeteil in seiner Maßhaltigkeit zu mindestens zwei Implantaten und/oder Pfeilerzähnen überprüft und gegebenenfalls durch Trennen und erneutem spannungsfreien Fügen korrigiert wird, und dann das Einprobeteil gescannt wird, und ein digitales Modell des ggf. geänderten Einprobeteil und/oder des Kiefers generiert wird, das zur Erzeugung einer mittels CAD/CAM-gefertigten und/oder mittels 3-D-gedruckten Restauration verwendet wird. Vorzugsweise erfolgt zum Anpassen des Einprobeteils zwischen mindestens zwei Implantaten und/oder Pfeilern eine Trennung, die durch anschließendes spannungsfreies Fügen, vorzugsweise durch Gießen oder Kleben, verbunden wird.

In Ausgestaltung des Verfahrens wird zunächst ein Einprobeteil hergestellt, um etwaige Ungenauigkeiten des Scans durch Trennen und erneutem Fügen zu beseitigen. Das Einprobeteil wird mit Schraubenkanälen für jedes Implantat versehen, um Abutments und/oder Laboranaloge einzusetzen. Mittels dieser kann der Sitz im Kiefer zunächst festgelegt werden und/oder der Sitz der Restauration überprüft werden.

In weiter Ausgestaltung des Verfahrens ist vorgesehen, dass in vorbestimmten Abstand und Winkel zu jedem Implantat und/oder Pfeiler eine geeignete mit dem Einprobeteil verbundene scanbare Grundform vorgesehen wird, damit nach der Korrektur des Einprobeteils eine enstprechende Korrektur des digitalen Modells des Kiefers und/oder des Einprobeteils durch Scannen erfolgen kann. Die scannbaren Grundformen und deren genaue Lage liefern beim Scannen die Referenzpunkte, deren Lageänderung den Korrekturberechnungen zugrunde gelegt wird.

Zur zusätzlichen Verbesserung der Genauigkeit ist in weiterer Ausgestaltung des Verfahrens vorgesehen, dass das Einprobeteil mit mindestens einer scanbaren, vorzugsweise zwei- oder dreidimensionalen, Struktur, insbesondere auf den Stegen zwischen zwei Implantaten und/oder Pfeilern, versehen wird. Durch die linienförmige scanbare Struktur ist eine genauere Korrektur des digitalen Modells auch zwischen den Referenzpunkten möglich.

Das anfängliche digitale Modell des Kiefers wird vorteilhaft genauer, wenn die Herstellung des intraorales Scans unter Verwendung von mit Implantaten und/oder Pfeilern verbundenen Scankörpern bekannter Form und Abmessungen erstellt wird. Besonders bei weitgehend zahnlosen Kiefern kann aufgrund fehlender Strukturen die Genauigkeit des anfänglichen Modells leiden. Die Scankörper ersetzen fehlende Strukturen und lassen durch ihre Lage und Abmessungen auf den Verlauf des Kieferbogens rückschließen, so dass das erstellte digitale Modell wesentlich genauer ausfällt.

In weiter Ausgestaltung des Verfahren ist vorgesehen, dass das Scannen des geänderten Einprobeteils extra-oral erfolgt. Die vom Patienten bereitzustellenden Zeitaufwand verringert sich somit vorteilhaft.

Auch die Maßnahme, dass eine Information über die Lage einer Trennstelle in das digitale Modell des Einprobeteils eingegeben wird, dient der Verbesserung der Genauigkeit. Eine solche Unstetigkeitsstelle kann dann bei der Korrekturrechnung entsprechend berücksichtigt werden.

Wenn die Restauration und/oder das Einprobeteil mittels stereolithographischer Verfahren erstellt wird, kann der gesamte Herstellungsprozess vorteilhaft automatisiert ablaufen.

Die Herstellung der Restauration gestaltet sich somit wie folgt: Der Zahnarzt oder -techniker formt den Patientenmund digital mit einem geeigneten Intraoral-Scanner ab und erstellt so ein digitales Modell der Kieferbögen. Dabei verwendet er geeignete Scanbodys, die in die Implantate geschraubt sind, um die Lage der Implantate zu erfassen. In der CAD/CAM Software werden die Positionen der Implantate anhand der digitalisierten Scanbodys erfasst und CAD gestützt ein digitales Modell eines Einprobeteils erstellt, dessen physische Ausgestaltung weiter unten beschrieben ist. Dieses Einprobeteil wird entweder CAM-gestützt oder stereolitographisch aus dem digitalen Modell direkt vom Zahnarzt gefertigt, sofern der Zahnarzt über eine geeignete 5achsige Maschine oder andere geeignete Maschinen verfügt. Alternativ kann das Modell digital an einen Zahntechniker geschickt werden, der eine geeignete 5achsige Maschine besitzt. Beim Herstellen aus einem Materialblock durch spanende Fertigungsverfahren ist eine 5achsige Maschine vonnöten, da in der Regel mehrere divergente Implantate vorliegen. In letzterem Fall schickt der Zahntechniker das gefertigte Einprobeteil an den Zahnarzt zurück. Das Material des Einprobeteils ist ein geeigneter fester Kunststoff, z.B. PMMA.

Die Struktur des Einprobeteils ist folgendermaßen charakterisiert:
Pro Implantat weist das Einprobeteil einen Schraubenkanal und eine scanfähige Struktur, z.B. Tetraeder ähnlich handelsüblichen Scanbodys, in definiertem Abstand zum Implantat auf. Diese scanfähige Struktur kann ein Tetraeder sein, den die Software leicht als Muster detektieren kann. Weiterhin weist das Einprobeteil auf jedem Steg eine gefräste Struktur auf, die die Bildregistrierung vereinfacht bzw. weniger fehleranfällig als im zahnlosen Patientenmund macht.

Das Einprobeteil wird in den Patientenmund gesetzt und versucht, in die Implantate zu schrauben. Wenn das Einprobeteil perfekt sitzt, kann der Zahntechniker mit der Erstellung der finalen Restauration beauftragt werden. Falls das Einprobeteil nicht sitzt, dann trennt der Zahnarzt diejenigen Stege, die nicht passen, vertikal auf, ähnlich dem aus WO001998020806 A1 bekannten vertikalen Auftrennen, so dass einzelne Segmente entstehen. Die Segmente werden einzeln auf die Implantate im Patientenmund verschraubt und im Patientenmund wieder zusammengefügt, z.B. verklebt.

Nach Aushärten des Klebers wird das zusammengefügte Einprobeteil wieder aus dem Patientenmund genommen. Die Software bietet dem Zahnarzt ein Programmschnittstelle, sogenanntes Tool an, mit dem er in der Software am digitalen Modell des Einprobeteils angeben kann, wo er das Einprobeteil physisch aufgetrennt hat. Dieses Tool ist ein einfaches aus CAD-Programmen bekanntes Schnitttool. Nun scannt entweder der Zahnarzt das zusammengefügte Einprobeteil erneut ein oder schickt das Teil zur Digitalisierung an den Zahntechniker. Nach der Digitalisierung des Einprobeteils klickt der Zahntechniker die speziellen Scanbody-ähnlichen Strukturen auf dem durch Scannen erzeugten Bild des Einprobeteils an, um die Implantatpositionen - wie sie exakt den Positionen im Patientenmund entsprechen - zu detektieren und zu markieren. Da der Zahnarzt bereits digital angegeben hat, wo die Auftrennung stattgefunden hat, weiß die Software automatisch, welche Stege des Einprobeteils verändert wurden. Dementsprechend wird die Implantat-Position der veränderten Stege automatisch angepasst. Nun hat der Zahntechniker die Position der Implantate in dem digitalen Modell der Software und zwar so, dass sie sehr genau der Situation im Patientenmund entsprechen. Dementsprechend kann der Zahntechniker mit der eigentlichen Fertigung der Restauration beginnen. Die verbleibenden Fehler bestehen in der Maschinenungenauigkeit und im Wesentlichen der Ungenauigkeit der Einzelbildaufnahmen. Das Problem der schwierigen Bildregistrierung in zahnlosen Patientenmündern und die Ungenauigkeit der Gipsmodellerstellung und Übernahme der Implantatpositionen in dieses Gipsmodell sind durch diese Erfindung beseitigt.

Analog gestaltet sich die Vorgehensweise bei beschliffenen Pfosten- oder Pfeilerzähnen, die auch mit Implantaten wechseln können.

Das mittels des Einprobeteils korrigierte digitale Modell des Einprobeteils und/oder das korrigierte digitale Modell des Kiefernbogens mit den genauen Lagen der Implantate oder Pfeilern kann dann für die CAD-gestützte Ausarbeitung eines digitalen Modells der Restauration genutzt werden.

Falls der Techniker ein digitales Modell zur ästhetischen Verblendung benötigt kann er sich auch dieses digital, z.B. mittels Software, z.B. ModelGen, erstellen und CAM-gestützt fertigen oder bei einer zentralen Fertigung erstellen lassen.

Die Anwendung des Einprobeteils ermöglicht einen modellfreien, digitalen Herstellungsprozess von passgenauen Implantat-Versorgungen. Der Zahnarzt muss keinen Abdruck und auch keinen Übertragungsschlüssel für die Übertragung der Implantatpositionen herstellen. Das Einprobeteil ersetzt den fehleranfälligen gebräuchlichen Überstragungsschlüssel. Der Zahntechniker muss kein Meistermodell aus Gips herstellen. Dadurch können Kosten und Zeit im Herstellungsprozess eingespart werden. Falls der Zahntechniker ein Modell zur ästhetischen Verblendung benötigt, kann er dies digital per SLA Methode mit Laboranalogen herstellen oder fertigen lassen.

### Kurze Beschreibung der Zeichnungen

Das erfindungsgemäße Verfahren sowie die erfindungsgemäße Vorrichtung werden anhand der Zeichnung erläutert. Es zeigen:
- Fig. 1: den erfindungsgemäßen Arbeitsablauf bei der Erstellung einer Restauration,
- Fig. 2: eine Aufsicht auf ein erfindungsgemäßes Einprobeteil und
- Fig. 3: eine Aufsicht auf ein korrigiertes Einprobeteil. Ausführungsbeispiele der Erfindung

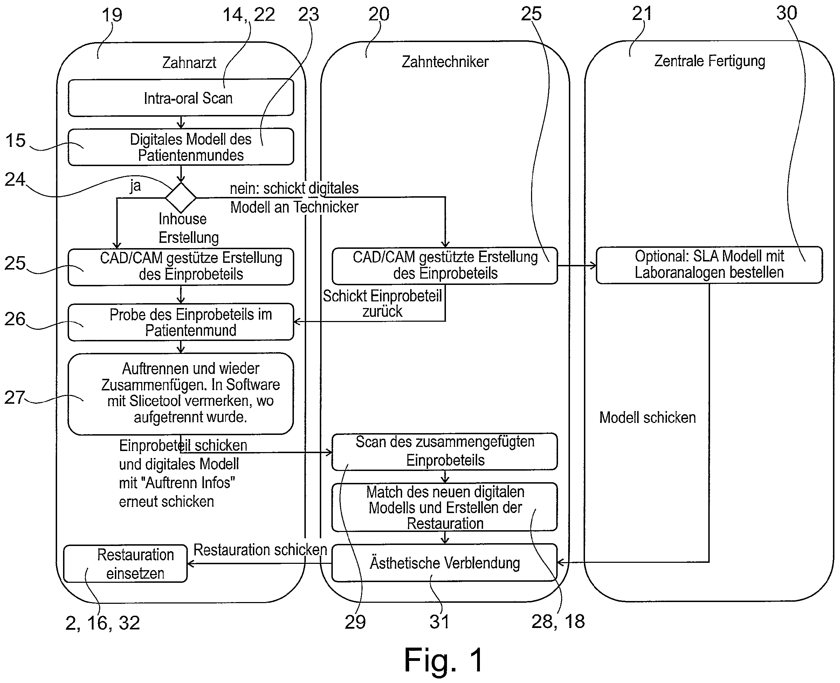

In Figur 1 sind die großen vertikalen Blöcke den einzelnen Akteuren, d.h. Zahnarzt, Zahntechnikerund Entfernte Fertigung, bei der Herstellung einer Restauration zugeordnet. Die Blöcke innerhalb der grossen Blöcke stehen für Tätigkeiten des jeweiligen Akteurs, wobei die Abfolge der Tätigkeiten durch verbindende Pfeile angedeutet ist.

Der Linke Block 19 enthält also die Tätigkeiten des Zahnarztes, der mittlere Block 20 die des Zahntechnikers und der rechte Block 21 die Tätigkeiten einer entfernten Fertigunsstätte.

Im linken Block 19 erstellt somit der Zahnazt zunächt einen Intra-oral Scan 22 der Kiefernbögen eines Patienten, aus dem ein digitalen Modell der Kieferbögen 23 auf bekannte Weise von einem Programm errechnet wird. Anschließend entscheidet der Arzt gemäß der Verzeigung 24, ob er dem linkem Ast der Verzweigung folgend ein CAD-Modell 25 des Einprobeteils selbst programmgestützt generiert und fertigt. Andernfalls sendet er den Datensatz des digitalen Modells der Kiefernbögen an den gemäß Block 20 agierenden Zahntechniker zur CAD/CAM gestützten Erstellung des Einprobeteils 25.

In beiden Fällen der Verzweigung 24 gelangt das gefertigte Einprobeteil wieder in den Block 19 zur Einprobe 26 in den Patientenmund. Bei der Einprobe werden etwaige mechanische Spannungen durch Auftrennen und wieder Zusammenfügen beseitigt und die Trennstelle im digitalen Modell mittels eines sogenannten Slicetools vermerkt 27, damit im Modell die Trennstelle bei der Korrekturrechnung berücksichtigt werden kann.

In Figur 1 gelangt dann das ggf. korrigierte Einprobeteil wieder in den Block 20 zum Zahntechniker, der das korrigierte Einprobeteil scannt 28. Alternativ könnte dieser Scannvorgang natürlich auch bei entsprechnder Ausrüstung wieder vom Zahnarzt durchgeführt werden. Das Ergebnis dieses Scanns und der markierten Bezugspositionen dient dann als Grundlage für eine Neuberechnung eines oder mehrerer digitaler Modell, z.B. des Einprobeteils und/oder des Kieferbobens aus den nach einem computergestützten Matches mit digitalen Designvorlagen ein digitales Modell der Restauration generiert wird, das schliesslich der Fertigung 29 der Restauration zugrundeliegt.

Nach der CAD/CAM gestützten Erstellung des Einprobeteils kann von Block 25 abzweigend schon der Datensatz des ersten digitalen Modells der Kieferbögen zu Block 21, der entfernten Fertigung, übergeben werden, um optional parallel ein stereolitografisch erstelltes Modell mit Laboranalogen zu bestellen und fertigen zu lassen 30, das dann vom Zahntechniker in Block 31 ästhetisch verblendet wird.

Die so fertiggestellte Restauration wird zum Einsetzen 32 an den Zahnarzt gesandt.

Wie leicht zu erkennen ist, verzichtet dieser Arbeitsablauf mit Vorteil auf die Erstellung des üblichen Meistermodells. Bei entsprechender Ausrüstung können alle Tätigkeiten auch innerhalb der Praxis eines Zahnaztes ausgeführt werden.

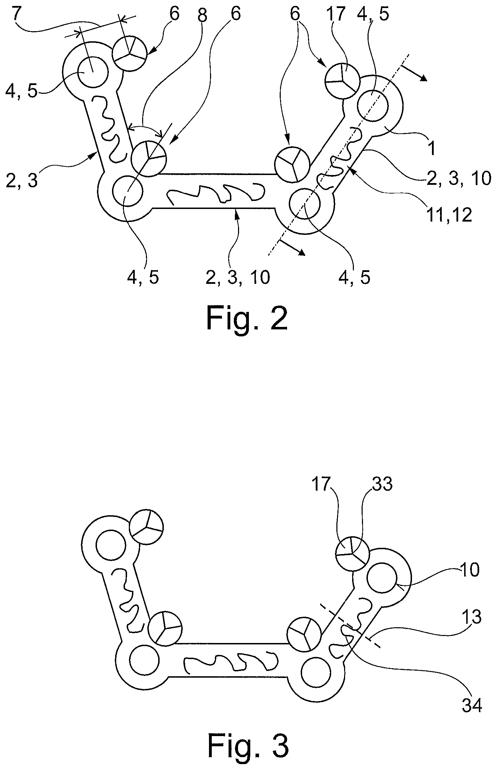

Figur 2 und Figur 3 zeigen jeweils eine Aufsicht auf dasselbe erfindungsgemäßes Einprobeteil 1 zur Verprobung eines Kiefernbogens mit insgesamt vier Implantaten 4, die unter den Schraubenkanälen 5 beim Einproben im Kieferbogen liegen. Durch die Schraubenkanäle 5 wird das Einprobeteil 1 mit den Implantaten verschraubt. Zwischen den vier Schraubenkanälen 5 befinden sich drei Stege 3, die wie in Figur 3 gezeigt, an Trennstellen 13 zwischen den Schraubenbohrungen 5 zu einzelnen Segmenten 10 getrennt werden können.

Natürlich kann ein Einprobeteil auch nur aus einem Steg bestehen, der zwei Implantate verbindet. Ein solches einfacheres Einprobeteil wird zur Erstellung einer Implantatbrücke (Figur 3) verwendet. Der grundsätzliche Arbeitsablauf bleibt aber derselbe wie für die Fertigung einer Größeren Restauration.

Statt der Implantate können zum Verankern der Restauration auch Zähne dienen, die meist beschliffen sind, um dann als Pfeiler oder Pfosten zur Befestigung der Restauration genutzt werden.

Schließlich können auch Implantate und Pfeilerzähne gemischt zur Verankerung Verwendung finden.

Als Referenzpunkte für das Scannen und die Vermessung des Einprobeteils durch die zur Anwendung gelangende Software dienen Grundformen 6, die zweckmäßiger Weise als Tetraeder geformt sind, damit sie leicht erkennbar sind. Die Spitze 33 der Grundform läßt sich im vergrößerten Abbild des Scans genau markieren. Da deren Abstand 7 und Winkel 8 als Bezugsgrößen zu den Implantaten 4 und/oder den Schraubenkanälen ein genaues Muster ergeben, das im digitalen Modell des Einprobeteils 1 enthalten ist. Die Lageveränderung dieser Scankörper 17 nach Auftrennen eines Stegs und wieder Zusammenfügen kann als Korrekturvektor bei der Berechnung eines korrigierten digitalen Modells des Einprobeteils herangezogen werden.

Zusätzlich hilft eine linienförmige Fräsung 12 als zweite Struktur 11, die leicht von der Software durch geeignete Mustererkennung nach Lageänderung für die genauere ortsabhängige Korrekturrechnung herangezogen werden kann, um die Genauigkeit zusätzlich erhöhen.

In Figur 3 ist eine Situation angedeutet, bei der das Einprobeteil 1 auf die drei linken Implantate passt; das Einprobeteil aber auf dem rechten Implantat nur unter Zwang zu befestigen ist. Der Steg 3 ist deshalb an Trennstelle 13 geteilt und nach Befestigen des rechten Segmentes 10 auf dem Implantat durch Kleben wieder zusammengefügt worden. Das digitale Modell des Kieferbogens und/oder des Einprobeteils wird anhand der aus einem Scan ermittelten Korrekturdaten korrigiert und der Konstruktion und Fertigung der Restauration zugrunde gelegt.

Das erfindungsgemäße Einprobeteil und Verfahren kann besonders vorteilhaft bei der genauen und schnellen Fertigung von ästhetischen Restaurationen von Zähnen gewerblich genutzt werden.

### Bezugszeichen

- 1: Einprobeteil
- 2: Implantatbrücken
- 3: Brückenstegen
- 4: Implantat
- 5: Schraubenkanal
- 6: Grundform
- 7: Abstand
- 8: Winkel
- 9: Tetraeder
- 10: Segment
- 11: Zweite Struktur
- 12: Fräsung
- 13: Trennstelle
- 14: Intraoraler Scan
- 15: Modell des Kieferbogens
- 16: Restauration
- 17: Scankörpern
- 18: Scannen
- 19: linker Block
- 20: mittlere Block
- 21: rechter Block
- 22: Erstellen eines intra-oral Scans
- 23: Erstellen digitales Kieferbogenmodell
- 24: Verzweigung
- 25: CAD/CAM-gestützte Erstellung des Einprobeteils
- 26: Einprobe des Einprobeteils
- 27: Korrektur des Einprobeteils und Markierung der Trennstelle
- 28: Scan und digitale Modellerstellung des korrigierten Einprobeteils
- 29: CAD und Fertigung der Restauration
- 30: Bestellen und Fertigen eines SLA-Modells mit Laboranalogen
- 31: Ästhetische Verblendung der Restauration
- 32: Einsetzen der Restauration
- 33: Spitze

## Patentansprüche

1. Verfahren zur Erstellung einer Restauration aus einem digitalen Modell (15) eines mit mindestens zwei Implantaten und/oder Pfeilern versorgten Patientenkiefers, wobei das Modell (15) mittels eines intraoral erstellten Scans (14) ermittelt ist, **dadurch gekennzeichnet, dass** aus dem Modell (15) mittels CAD/CAM ein Einprobeteil (1) hergestellt wird, das Einprobeteil (1) in seiner Maßhaltigkeit zu mindestens zwei Implantaten (4) und/oder Pfeilern überprüft und gegebenenfalls korrigiert wird, das Einprobeteil (1) gescannt wird, und ein digitales Modell des ggf. korrigierten Einprobeteils (1) generiert wird, das zur Erzeugung einer mittels CAD/CAM-gefertigten Restauration (16) verwendet wird, wobei zum Anpassen des Einprobeteils (1) zwischen mindestens zwei Implantaten (4) und/oder Pfeilern eine Trennung durch eine Trennstelle (13) erfolgt, die durch anschließendes spannungsfreies Fügen, vorzugsweise durch Gießen oder Kleben, verbunden wird.

2. Verfahren nach Anspruch 1,
**dadurch gekennzeichnet,**
**dass** das Einprobeteil (1) mit Schraubenkanälen (5) für jedes Implantat (4) versehen wird.

3. Verfahren nach Anspruch 2,
**dadurch gekennzeichnet,**
**dass** in vorbestimmten Abstand (7) und Winkel (8) zu jedem Implantat (4) und/oder Pfeiler eine geeignete mit dem Einprobeteil (1) verbundene scanbare Grundform (6) vorgesehen wird.

4. Verfahren nach Anspruch 2 oder 3,
**dadurch gekennzeichnet, dass** das Einprobeteil (1) mit mindestens einer scanbaren, vorzugsweise zwei- oder dreidimensionalen, Struktur (11), insbesondere auf den Stegen (3) zwischen zwei Implantaten (4) und/oder Pfeilern, versehen wird.

5. Verfahren nach einem der vorhergehenden Ansprüche,
**dadurch gekennzeichnet, dass** die Herstellung des intraoralen Scans (14) unter Verwendung von mit Implantaten (4) und/oder Pfeilern verbundenen Scankörpern (17) bekannter Form und Abmessungen erstellt wird.

6. Verfahren nach einem der vorhergehenden Ansprüche,
**dadurch gekennzeichnet, dass** das Scannen (18) des geänderten Einprobeteils (1) extra-oral erfolgt.

7. Verfahren nach einem der vorhergehenden Ansprüche,
**dadurch gekennzeichnet, dass** eine Information über die Lage einer Trennstelle (13), in das digitale Modell des Einprobeteils (1) eingegeben wird.

8. Verfahren nach einem der vorhergehenden Ansprüche,
**dadurch gekennzeichnet, dass** die Restauration (16) mindestens teilweise mittels stereolithographischer Verfahren erstellt wird.

9. Verfahren nach einem der vorhergehenden Ansprüche,
**dadurch gekennzeichnet, dass** das Einprobeteil (1) einen oder mehrere Stege (3) umfasst, zur Erstellung eines spannungsfreien Sitzes, sogenannten Passive fit, der genannten Stege (3) für die Erstellung von implantat- und/oder pfeilergetragenen Brücken (2) und Stegen (3) mittels eines CAD/CAM-Tools für die Erstellung von Restaurationen (5), wobei das Einprobeteil (1) eine scanfähige Struktur (6) in definiertem Abstand (7) und Winkel (8) bezüglich jedes Implantats (4) und/oder Pfeilers, aufweist, wobei das Einprobeteil (1) eine, durch Kleben, zusammenfügbare Trennstelle (13) aufweist, wobei die scanfähige Struktur (6) ein spitz zusammenlaufendes Prisma, vorzugsweise ein Tetraeder (9), ist.

10. Verfahren nach Anspruch 9, **dadurch gekennzeichnet, dass** auf einem zwischen zwei Implantaten (4) und/oder Pfeilern gelegenen Steg (3) eine scanbare Struktur (11), vorzugsweise eine zweidimensionale Fräsung (12), vorgesehen wird.

11. Verfahren nach Ansprüchen 9 oder 10, **dadurch gekennzeichnet, dass** das Einprobeteil (1) aus Kunststoff, vorzugsweise aus PMMA, hergestellt wird.

## Claims

1. A method for creating a restoration from a digital model (15) of a patient's jaw provided with at least two implants and/or pillars, wherein the model (15) is determined by means of an intraorally created scan (14), **characterised in that** a try-in part (1) is produced from the model (15) using CAD/CAM, the dimensional accuracy of the try-in part (1) is checked and corrected if necessary in relation to at least two implants (4) and/or pillars, the try-in part (1) is scanned, and a digital model of the try-in part (1), corrected if necessary, is generated, which is used to create a restoration (16) produced by means of CAD/CAM, wherein, in order to adapt the try-in part (1) between at least two implants (4) and/or pillars, a separation by means of a separating point (13) occurs, which is connected by subsequent tension-free joining, preferably by casting or gluing.

2. The method according to claim 1, **characterised in that** the try-in part (1) is provided with screw channels (5) for each implant (4).

3. The method according to claim 2, **characterised in that** a suitable scannable basic shape (6) connected to the try-in part (1) is provided at a predetermined distance (7) from and angle (8) to each implant (4) and/or pillar.

4. The method according to claim 2 or 3, **characterised in that** the try-in part (1) is provided with at least one scannable, preferably two-dimensional or three-dimensional, structure (11), in particular on the bars (3) between two implants (4) and/or pillars.

5. The method according to one of the preceding claims, **characterised in that** the production of the intraoral scan (14) is carried out using scan bodies (17) that have a known shape and dimensions and are connected to implants (4) and/or pillars.

6. The method according to one of the preceding claims, **characterised in that** the scanning (18) of the amended try-in part (1) occurs extraorally.

7. The method according to one of the preceding claims, **characterised in that** information about the position of a separating point (13) is entered into the digital model of the try-in part (1).

8. The method according to one of the preceding claims, **characterised in that** the restoration (16) is created at least partially by means of stereolithographic methods.

9. The method according to one of the preceding claims, **characterised in that** the try-in part (1) comprises one or a plurality of bars (3), for creating a tension-free fit, a socalled passive fit, of said bars (3) for creating implant-supported and/or pillar-supported bridges (2) and bars (3) by means of a CAD/CAM tool for the creation of restorations (5), wherein the try-in part (1) has a scannable structure (6) at a defined distance (7) and angle (8) with respect to each implant (4) and/or pillar, wherein the try-in part (1) has a separating point (13) that can be joined together by gluing, wherein the scannable structure (6) is a prism that converges to a point, preferably a tetrahedron (9).

10. The method according to claim 9, **characterised in that** a scannable structure (11), preferably a two-dimensional milling (12), is provided on a bar (3) located between two implants (4) and/or pillars.

11. The method according to one of claims 9 or 10, **characterised in that** the try-in part (1) is made from plastic, preferably from PMMA.

## Revendications

1. Procédé de création d'une restauration à partir d'un modèle (15) numérique d'une mâchoire d'un patient pourvue d'au moins deux implants et/ou piliers, dans lequel le modèle (15) est déterminé au moyen d'un balayage (14) réalisé dans la bouche, **caractérisé en ce que,** à partir du modèle (15), au moyen du CAD/FAO, une pièce d'essayage (1) est produite, la stabilité dimensionnelle de la pièce d'essayage (1) est vérifiée par rapport à au moins deux implants (4) et/ou piliers et, si nécessaire, corrigée, la pièce d'essayage (1) est balayée et un modèle numérique de la pièce d'essayage (1) éventuellement corrigée est généré, lequel est utilisé pour créer une restauration (16) produite au moyen du CAD/FAO, dans lequel, pour ajuster la partie d'essayage (1) entre au moins deux implants (4) et/ou piliers, une séparation est effectuée à l'aide d'un point de séparation (13), lequel est relié par un assemblage sans tension ultérieur, de préférence par coulée ou collage.

2. Procédé selon la revendication 1, **caractérisé en ce que** la pièce d'essayage (1) est pourvue de canaux de vis (5) pour chaque implant (4).

3. Procédé selon la revendication 2, **caractérisé en ce que,** à une distance (7) et à un angle (8) prédéterminés par rapport à chaque implant (4) et/ou pilier, une forme de base (6) pouvant être balayée appropriée, reliée à la pièce d'essayage (1), est située.

4. Procédé selon la revendication 2 ou 3, **caractérisé en ce que** la pièce d'essayage (1) est pourvue d'au moins une structure (11) pouvant être balayée, de préférence bidimensionnelle ou tridimensionnelle, en particulier sur des nervures (3) entre deux implants (4) et/ou piliers.

5. Procédé selon l'une quelconque des revendications précédentes, **caractérisé en ce que** la réalisation du balayage (14) dans la bouche est effectué à l'aide ds corps de balayage (17) de forme et de dimensions connues reliés aux implants (4) et/ou piliers.

6. Procédé selon l'une quelconque des revendications précédentes, **caractérisé en ce que** le balayage (18) de la pièce d'essayage (1) modifiée est effectué dans la bouche.

7. Procédé selon l'une quelconque des revendications précédentes, **caractérisé en ce que** des informations sur la position d'un point de séparation (13) sont saisies dans le modèle numérique de la pièce d'essayage (1).

8. Procédé selon l'une quelconque des revendications précédentes, **caractérisé en ce que** la restauration (16) est créée au moins partiellement au moyen des procédés stéréolithographiques.

9. Procédé selon l'une quelconque des revendications précédentes, **caractérisé en ce que** la pièce d'essayage (1) comprend au moins une nervure (3) pour créer un siège sans tension, appelé passive fit, desdites nervures (3) pour la création des ponts (2) et des nervures (3) supportés sur implants et/ou piliers au moyen d'un outil CAD/FAO pour la création des restaurations (5), dans lequel la pièce d'essayage (1) comporte une structure (6) pouvant être balayée à une distance (7) et à un angle (8) prédéterminés par rapport à chaque implant (4) et/ou pilier, dans lequel la pièce d'essayage (1) comporte un point de séparation (13) pouvant être assemblé par collage, dans lequel la structure (6) pouvant être balayée est un prisme convergent pointu, de préférence un tétraèdre (9).

10. Procédé selon la revendication 9, **caractérisé en ce que,** sur une nervure (3) située entre deux implants (4) et/ou piliers, une structure (11) pouvant être balayée, de préférence un fraisage (12) bidimensionnel, est situé.

11. Procédé selon les revendications 9 ou 10, **caractérisé en ce que** la pièce d'essayage (1) est produite en matière plastique, de préférence en PMMA.
